# EUROPEAN PATENT APPLICATION

(11) **EP 4 722 502 A1**
(43) Date of publication of application: **08.04.2026**
(21) Application number: 25206503.2
(22) Date of filing: 02.10.2025
(51) Int. Cl.: F01D 25/28

(54) **ROTOR BEARING LOADING MECHANISM**

(30) Priority: 04.10.2024 US 202418906635
(71) Applicant: PRATT & WHITNEY CANADA CORP., Longueuil, Québec J4G 1A1 (CA)
(72) Inventor: LAVOIE, Louis, (01BE5) Longueuil, J4G 1A1 (CA); ISABEL, Yves, (01BE5) Longueuil, J4G 1A1 (CA); KANBERGS, Natalie, (01BE5) Longueuil, J4G 1A1 (CA); FISH, Jason, (01BE5) Longueuil, J4G 1A1 (CA); HAYWARD, Brent, (01BE5) Longueuil, J4G 1A1 (CA); PATEL, Divya, (01BE5) Longueuil, J4G 1A1 (CA)
(74) Representative: Dehns

(57) **Abstract**

An apparatus (50) for stabilizing a fan assembly of a gas turbine engine during transport includes a ring (52) configured to engage a nose cone (54) of the fan assembly; an outer bracket (56) connected to the ring (52) and configured to mount to a fan casing of the fan assembly; and a tensioning assembly between the ring (52) and the outer bracket (56) to move the ring (52) along an axis of a shaft of the fan assembly. An assembly with the gas turbine engine and a method are also disclosed.

## Description

### FIELD

The present disclosure relates to a system and method for stabilizing a fan assembly of a gas turbine engine during transportation.

### BACKGROUND

Gas turbine engines utilize large fan blade assemblies at the very forward end of the primary turbine shaft assembly. These large fan blade assemblies are supported by a series of bearings. These bearings are typically lubricated via oil pumps while the engine is in service.

During transport, the bearing oil pumps are non-operational. Therefore, the bearings are not pressurized and/or lubricated during transport. Further, there is a large moment applied to the shaft due to the weight of the fan. The fan shaft is supported in a plurality of bearing assemblies, but the forward-most bearing assembly carries a large amount of the fan weight and is subjected to downward forces due to the moment generated by the fan.

Another source of concern is that during engine transportation, the transportation can cause vibrations and unwanted rotation of the fan assembly, which could cause damage to the bearings since they are not pressurized and/or lubricated.

Thus, it is clear that improvement is needed to prevent damage of fan assemblies, especially damage to the bearings of the fan assemblies, during transport.

### SUMMARY OF THE DISCLOSURE

In one non-limiting aspect, an apparatus for stabilizing a fan assembly of a gas turbine engine during transport comprises a ring configured to engage a nose cone of the fan assembly; an outer bracket connected to the ring and configured to mount to a fan casing (or fan housing) of the fan assembly; and a tensioning assembly between the ring and the outer bracket to move the ring along an axis of a shaft of the fan assembly.

In one non-limiting configuration, the ring is sized to accommodate nose cones of different shape.

In another non-limiting configuration, the ring comprises a material selected from the group consisting of rubber, foam, PTFE, POM and combinations thereof.

In still another non-limiting configuration, the ring is configured to engage the nose cone and prevent relative rotation of the nose cone and the fan casing.

In a further non-limiting configuration, the outer bracket is configured to mount to a front edge of the fan housing.

In a still further non-limiting configuration, the outer bracket is adjustable to different diameter fan housings.

In another non-limiting configuration, the outer bracket comprises a plurality of arms extending between the ring and the fan housing.

In still another non-limiting configuration, the plurality of arms are adjustable in length such that the outer bracket is adjustable to different diameter fan housings.

In a further non-limiting configuration, each arm of the plurality of arms comprises a sliding mechanism whereby length of each arm can be adjusted.

In a still further non-limiting configuration, the plurality of arms connect to the ring through a slot/locking mechanism.

In another non-limiting configuration, the outer bracket has an outer edge that comprises a plurality of slots in a circular pattern whereby different bolt patterns and spacings of the fan housing can be accommodated.

In still another non-limiting configuration, the apparatus further comprises a cover mounted to the outer bracket to prevent objects from entering the fan casing.

In a further non-limiting configuration, the cover mounts to both the ring and the outer bracket.

In a still further non-limiting configuration, the outer bracket is made of a material selected from the group consisting of metal alloys, composites and combinations thereof.

In another non-limiting configuration, the plurality of arms are pivotable relative to the ring.

In still another non-limiting configuration, the tensioning assembly comprises a threaded assembly between the ring and the outer bracket.

In another non-limiting aspect, a fan assembly comprises a fan on end of a fan shaft; a nose cone centrally mounted on the fan; a fan housing having an edge surrounding an opening for the fan, the fan shaft being mounted within the fan housing in a plurality of bearings; a ring configured to engage the nose cone; an outer bracket connected to the ring and configured to mount to the fan casing; and a tensioning assembly between the ring and the outer bracket to move the ring along an axis of a shaft of the fan assembly.

In a non-limiting configuration, the outer bracket comprises a plurality of arms extending between the ring and the fan housing, and the plurality of arms are adjustable in length such that the outer bracket is adjustable to different diameter fan housings.

In another non-limiting aspect, a method for stabilizing a fan assembly of a gas turbine engine during transport, wherein the fan assembly comprises a fan on end of a fan shaft; a nose cone centrally mounted on the fan; and a fan housing having an edge surrounding an opening for the fan, the fan shaft being mounted within the fan housing in a plurality of bearings; and the method comprises engaging the nose cone with a ring configured to engage the nose cone; affixing an outer bracket to the fan casing, the outer bracket being connected to the ring; and tensioning a tensioning assembly between the ring and the outer bracket to move the ring along an axis of the shaft, the ring engaging the nose cone and radially supporting the nose cone within the fan casing, and the ring pushing the fan and the fan shaft rearward relative to the fan housing whereby compression is applied to the plurality of bearings.

In a non-limiting configuration, the outer bracket comprises a plurality of arms extending between the ring and the fan housing, and the plurality of arms are adjustable in length such that the outer bracket is adjustable to different diameter fan housings, the method further comprises the step of adjusting the length of the plurality of arms such that the outer bracket can be connected to the ring and also to fan housings of different diameter.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 schematically illustrates a side view of a fan and fan shaft assembly mounted in a series of bearings;
FIG. 2 schematically illustrates an end view of a fan assembly with a non-limiting embodiment of an apparatus for stabilizing the fan assembly during transport;
FIG. 3 schematically illustrates a further non-limiting embodiment of an apparatus for stabilizing the fan assembly;
FIGS. 4-6 illustrate a ring component of the apparatus as disclosed herein, in position on nose cones of different shape;
FIG. 7 schematically illustrates further non-limiting embodiments of an apparatus for stabilizing a fan assembly;
FIG. 8 further illustrates a fan assembly and apparatus for stabilizing the fan assembly;
FIG. 9 illustrates a non-limiting alternative configuration for an outer bracket.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

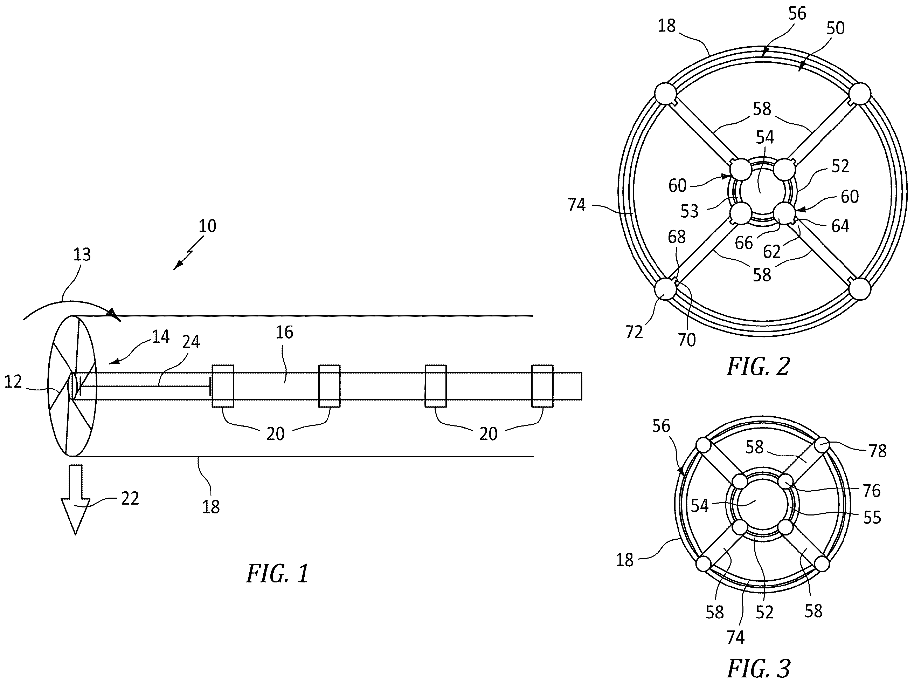

FIG. 1 schematically illustrates a fan assembly 10 having a fan 12 mounted at a forward end 14 of a shaft 16. Shaft 16 is mounted within a fan housing 18 at a plurality of bearings 20. While not shown, bearings 20 would be supported through static structure, for example mounted between fan housing 18 and bearings 20. During transportation of an engine such as a gas turbine containing fan assembly 10, bearings 20 are not typically lubricated or pressurized as the oil to lubricate them is pumped by a pump that is not operational during transport. Further, each bearing 20 typically has a plurality of balls or rollers which, when not in operation, collect in a bottom portion of the race defined in each bearing 20. Thus, during such transportation, rotation (schematically illustrated at 13) of fan 12 in bearings 20 is not desirable as the bearings are not pressurized and/or lubricated and the balls or rollers are all collected at a bottom of the bearing. Any rotation under these circumstances can potentially damage the bearings.

In addition, fan 12 has a considerable weight, and this weight applies a substantial downward force or moment, represented in FIG. 1 at arrow 22. This creates a moment arm 24 schematically illustrated between fan 12 and a forward most bearing 20 which can apply considerable undesirable forces to this forward most bearing 20 as well as the shaft 16 at this location.

Thus, it will be appreciated that there are numerous potential problems that can occur during transportation of a gas turbine engine containing fan assembly 10.

Fan assembly 10 can be, as one non-limiting example, the low-pressure compressor (or fan) in a turbofan engine which can have multiple shafts. Alternatively, and also not as a limitation, the fan assembly can be in engines or apparatus of other configuration, the relevant features of which are a fan within a fan case and mounted on a shaft supported by one or more bearings. During transportation of such a fan assembly, the subject matter of the present disclosure can be utilized.

In one non-limiting embodiment, an apparatus 50 is disclosed (FIG. 2) for engaging fan 12 against rotation and also for radially supporting fan 12 within fan housing 18. Apparatus 50 can have a ring 52 for engaging a nose cone 54 of fan assembly 10, and apparatus 50 further has an outer bracket 56 for supporting ring 52 relative to fan housing 18.

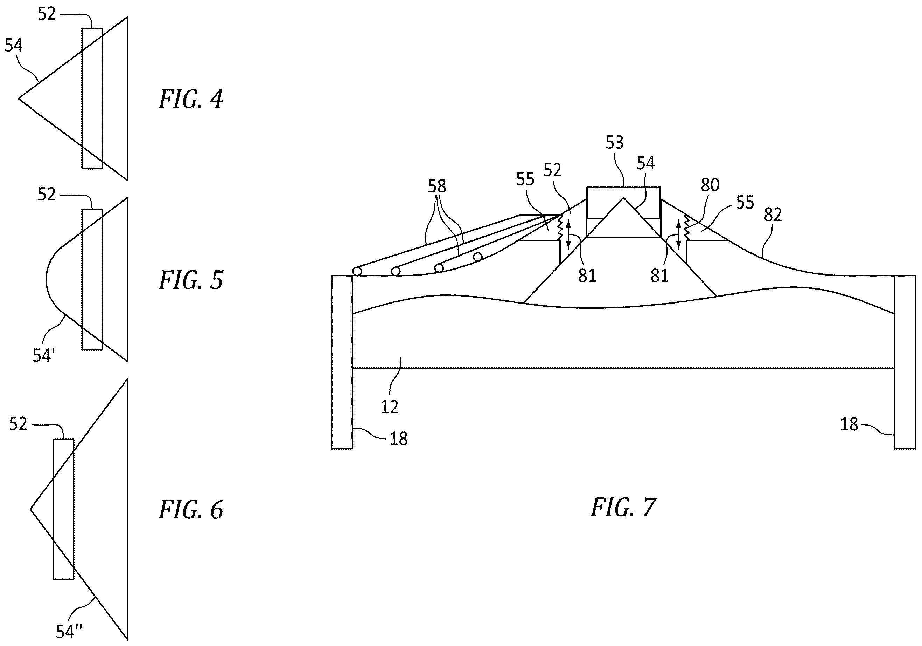

Ring 52 is configured and sized to slide partially over a nose cone of various different fan assemblies. Different configurations of nose cones 54 are illustrated in FIGS. 4-6, along with interaction of ring 52 with nose cone 54. FIG. 4 shows ring 52 engaging a nose cone 54 having a substantially straight-walled conical shape. FIG. 5 shows ring 52 engaging a nose cone 54' having a rounded conical shape. FIG. 6 shows ring 52 engaging a nose cone 54" having a shorter and wider conical shape as compared to the nose cone 54 of FIG. 4. It will be appreciated that ring 52 has a diameter that is selected to be able to engage with a wide variety of different shapes of nose cones such that the apparatus as disclosed herein can be used with a wide variety of different fan assemblies. In addition, ring 52 can be made of a material that is deformable and/or elastic, such as foam or rubber or the like. Thus, it should be appreciated that ring 52 is sized such that multiple nose cone geometries can be accommodated, with the very tip of the cone being suspended in space, and the ring being selected such that small and large nosecones can fit, while enabling enough clearance for the tip itself. Further, as will be discussed below, ring 52 can have an additional component mounted for interacting with nose cones to hold them with stability without causing damage to the nose cone surface, for example.

Still considering the material of the ring 52, this material should be stiff enough to resist large deformation while in use, while also being soft and flexible enough to conform to the nose cone shape slightly and provide a solid contacting surface. Fluoropolymer materials can also be useful, such as polytetrafluoroethylene (PTFE) as one non-limiting example, or semi-crystalline engineering thermoplastic such as polyoxymethylene (POM). These materials have excellent properties including low coefficient of friction and good dimensional stability. Thus, ring 52 can be fabricated from a material selected from the group consisting of rubber, foam, PTFE, POM and combinations thereof, or can be fabricated from other materials and coated with material selected to provide desired interaction with the nose cone.

Returning to FIG. 2, ring 52 is held in place as desired by outer bracket 56. Outer bracket 56 can include a plurality of arms 58 which can extend between ring 52 at one end and fan housing 18. Arms 58 can connect to ring 52 in a number of suitable ways. In the non-limiting configuration of FIG. 2, a slot/locking mechanism 60 is used to make the connection between arms 58 and ring 52. Such a locking mechanism involves a slot 62 defined on one of ring 52 and arm 58, and a protruding tongue 64 or other structure on the other of the ring 52 and arm 58, that engages with slot 62, for example by lateral sliding engagement. In FIG. 2, slot 62 is on the arm and tongue 64 is on a connector 66 that engages with ring 52. Of course, these structures can be in reverse position as well, with the tongue on the arm and the slot on the connector. These configurations advantageously allow for outer bracket 56 to be assembled in place, if desired. A similar structure can be used to secure the other end of arms 58 to fan housing 18. In this case, a slot 68 can be defined in an end of arms 58, and can be engaged by a tongue 70 of a connector 72 that is itself connected to fan housing 18. These structures also can be reversed, with slots in the connector and tongues on the arms.

Outer bracket 56 can have an outer edge that can have a plurality of slots in a circular pattern whereby different bolt patterns and spacings of the fan housing can be accommodated.

FIG. 2 also shows that outer bracket 56 can have, if desired, circumferential support portions 74 that generally circumferentially join ends of arms 58 as shown. Support portions 74 can help to provide a stable structure for radially supporting nose cone 54 within fan housing 18 as desired. Support portions 74 can be used between each arm 58 to define a full circumference, or can be positioned only between alternating pairs of arms, to provide stability while also saving on materials and weight and leaving some of the structure of fan housing 18 still accessible as may be needed.

It should be appreciated that arms 58 can be adjustable in length, if desired, by providing them with a sliding mechanism, for example a telescoping structure, that allows arms 58 to be adjusted in length. This can make arms 58 and therefore the entire assembly, adjustable to be used with a wide variety of engines having differently sized fan housings.

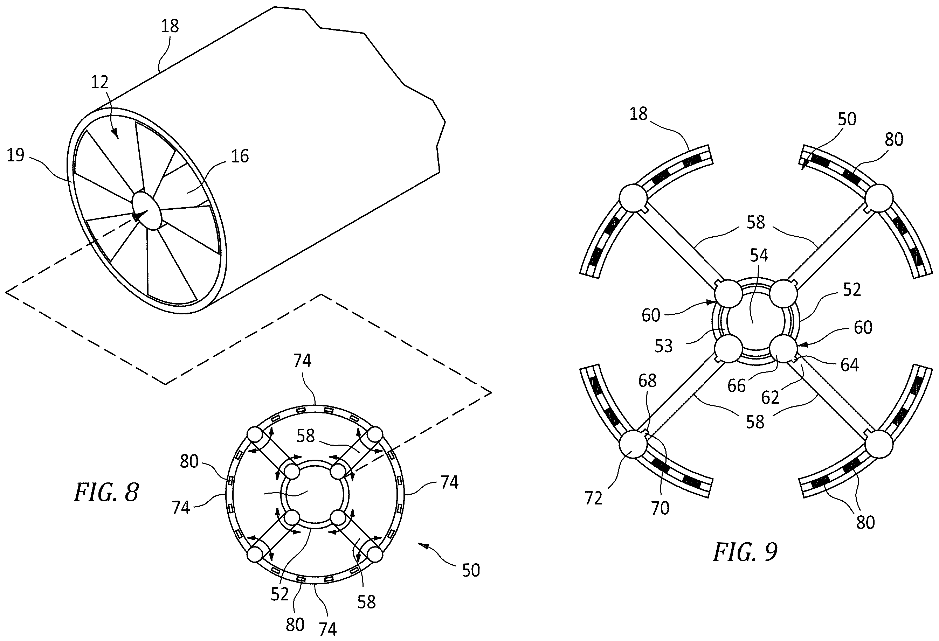

FIG. 3 illustrates an alternative non-limiting configuration of outer backet 56 wherein arms 58 are connected to ring 52 by pivot connections 76 which advantageously allow pivot of arms 58 relative to ring 52 which can be useful during installation and or axial tightening of ring 52 on nose cone 54 to allow assembly 50 to adapt and radially support fan 12 as desired. Radially outer ends of arms 58 could also be connected to fan housing 18 with similar pivot connections 78. Further, arms 58 in this configuration can also be connected by radial segments or portions 74 as shown. Also as shown, these radial segments 74 can be between each pair of arms, such that there is a radial segment between every adjacent pair of arms. Alternatively, segments 74 can be only between every other pair of arms, as this can help to produce a stable structure while minimizing material cost and weight. Referring to FIG. 9 also, segments 74 can extend in both directions from a connection point with arms 58 in only a portion of the distance to the next connection point 72. This results in each arm 58 having a foot 74' which is smaller in size than the full circumference portions 74 discussed above. Smaller feet 74' such as those shown in FIG. 9 can allow installation of the bracket without interfering with the existing brackets on the fan case, which may not be possible using a full ring as the mounting bracket.

Returning to FIGS. 2 and 3 show a double ring structure for ring 52. This double ring includes outer ring 52 and inner ring 53. This structure can be usefully adapted to providing axial adjustability to the device while also providing good interaction between ring 52 and nose cone 54. For example, and referring also to FIG. 7, a threaded connection or assembly 80 can advantageously be positioned at a suitable location between ring 52 and outer bracket 56 or arms 58, and can be used to axially (relative to shaft 16, FIG. 1) position ring 52, 53 relative to nose cone 54, 54', 54" to apply an axial force to the nose cone that serves to engage the ring with fan assembly and radially support the fan assembly relative to the fan housing. This is also schematically illustrated by arrows 81 in FIG. 7. This also applies a rearward force as desired (to the right in FIG. 1) to engage bearings 20 and protect them against vibration or unintended rotation while the bearings are not otherwise pressurized and/or lubricated.

FIG. 7 shows threaded connection 80 between arms 58 and ring 52 and this configuration would move both rings 52, 53 axially (up or down in FIG. 7) relative to fan housing 18 (and of course nose cone 54). It should be appreciated that this threaded connection 80 could equally be positioned between ring 52 and any outer threaded component 55 that is in turn supported by arms 58.

Threaded connection 80 could be circumferential threads positioned around an entire outer circumference of ring 52. Alternatively, different threaded connections could be positioned between ends of arms 58 and ring 52. Other threaded connections for axial movement of ring 52 and/or 53 are also contemplated.

Still referring to FIG. 7, the left side of this drawing further illustrates the length adjustability of arms 58. Four different positions and lengths of arms are illustrated and this illustrates how the length-adjustable arms 58 could be used to adjust outer bracket 56 to fan housings 18 of different sizes. As mentioned above, one way to provide such length-adjustability is with telescoping structures, and other structures are also contemplated.

The right side of FIG. 7 illustrates a cover 82 that can be connected to ring 52 or even nose cone 54, and then stretched or otherwise disposed out to the edge of fan housing 18 to cover the entire opening of fan housing 18 with the stabilizing assembly 50 in place, to both stabilize the fan assembly as desired, and also to help prevent foreign objects from entering fan housing 18 during transportation.

In use, assembly 50 can be mounted to a fan assembly by positioning ring(s) 52, 53 over nose cone 54 of a fan assembly to be transported. Outer bracket 56 can then be positioned, for example by securing one end of each arm 58 relative to fan housing 18 and the other end relative to ring 52. This can involve adjusting the length of arms 58 and/or angle of arms relative to the connection point with ring 52 and/or fan housing 18, as necessary. Thus, in this configuration, pivot of arms relative to ring 52 as well as fan housing 18 is provided as may be needed for any particular fan housing size and configuration. Once outer bracket 56 is installed, rings 52, 53 can then be axially positioned, for example using threaded connection 80, to apply axial force to nose cone 54 in a rearward direction. This engages rings 52, 53 with nose cone 54 and radially supports fan 12 and nose cone 54 relative to fan housing 18, and also applies a rearward force that immobilizes the bearings 20 of shaft 16. Further, the combination of engagement of ring with nose cone, as well as the compressive force on the balls or rollers within bearings 20, serves to prevent unwanted rotation of fan 12 while in transportation, thereby protecting bearings 20 from damage due to rotation or vibration without pressurization and/or lubrication.

When the fan assembly reaches its intended destination, rings can be moved axially forward, releasing the engagement with the nose cone 54, and also releasing the compression of the balls or rollers within bearings 20. Assembly 50 can then be partially or completely removed from fan assembly 10 so that fan assembly 10 can be prepared for and entered into service. It is likely that the entire assembly would be removed out of weight concerns.

FIG. 8 shows assembly 50 spaced from housing 18, where it can be seen how outer portions 74 can be connected to housing 18, for example along a front edge 19 of fan housing 18. FIG.8 also again schematically illustrates the pivot connections (see arrows) between arms 58 and ring 52 and also between arms 58 and outer portions 74.

FIGS. 8 and 9 illustrate a further configuration wherein slots 80 can be positioned along outer portions 74, in a circular or circle segment pattern, to provide a plurality of different options for mounting to fan housing 18. The slot configuration and multiple positions of such slots allows for great flexibility in connection to various different fan housings as desired. Again, as mentioned above, FIG. 9 shows a non-limiting configuration wherein outer sections 74 are a smaller foot configuration, wherein each section 74 extends a distance in each direction from connector 72 without defining a full circumference as in the embodiments of FIGS. 2 and 3.

It should be appreciated that by mounting the stabilizing assembly as disclosed herein to the front of an engine assembly, unintended rotation of the fan assembly can be prevented, and the bearing balls or rollers in the bearings are engaged, preventing vibration from damaging the balls or rollers or the raceway they are positioned in.

The design can be utilized across multiple engine series and sizes, which enables maximum design applicability and helps to standardize and improve quality of the product by protecting the product through the shipping process.

The force applied to the front of the fan hub, or nose cone, effectively bolts the fan in place and loads the bearings rearward as desired and discussed above, while also fixing the fan hub center axis in space and thus also preventing the weight of the fan from bending the shaft.

The bracket portion of assembly 50 can be created from a combination of metal alloys or composites, which enable maximum coverage and durability while minimizing weight of the assembly.

It will also be appreciated that the two-part configuration of the assembly as disclosed herein makes the structure simple to manufacture, robust and easy to replace in case of damage or wear over time.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. An apparatus (50) for stabilizing a fan assembly (10) of a gas turbine engine during transport, comprising:
a ring (52) configured to engage a nose cone (54; 54'; 54'') of the fan assembly (10);
an outer bracket (56) connected to the ring (52) and configured to mount to a fan housing (18) of the fan assembly (10); and
a tensioning assembly (80) between the ring (52) and the outer bracket (56) to move the ring (52) along an axis of a shaft (16) of the fan assembly (10).

2. The apparatus of claim 1, wherein the ring (52) is sized to accommodate nose cones (54, 54', 54'') of different shape.

3. The apparatus of claim 1 or 2, wherein:
the ring (52) comprises a material selected from the group consisting of rubber, foam, PTFE, POM and combinations thereof; and/or
the outer bracket (56) is made of a material selected from the group consisting of metal alloys, composites and combinations thereof.

4. The apparatus of any preceding claim, wherein the ring (52) is configured to engage the nose cone (54; 54'; 54'') and prevent relative rotation of the nose cone (54; 54'; 54') and the fan casing (18).

5. The apparatus of any preceding claim, wherein the outer bracket (56) is configured to mount to a front edge (19) of the fan housing (18).

6. The apparatus of any preceding claim, wherein the outer bracket (56) is adjustable to different diameter fan housings (18).

7. The apparatus of any preceding claim, wherein the outer bracket (56) comprises a plurality of arms (58) extending between the ring (52) and the fan housing (18), optionally wherein the plurality of arms (56) connect to the ring (52) through a slot/locking mechanism (60).

8. The apparatus of claim 7, wherein the plurality of arms (58) are adjustable in length such that the outer bracket (56) is adjustable to different diameter fan housings (18), optionally wherein each arm (58) of the plurality of arms (58) comprises a sliding mechanism whereby length of each arm (58) can be adjusted.

9. The apparatus of any preceding claim, wherein the outer bracket (56) has an outer edge that comprises a plurality of slots in a circular pattern whereby different bolt patterns and spacings of the fan housing (18) can be accommodated.

10. The apparatus of any preceding claim, further comprising a cover (82) mounted to the outer bracket (56) to prevent objects from entering the fan housing (18), optionally wherein the cover (82) mounts to both the ring (52) and the outer bracket (56).

11. The apparatus of claim 7 or any of claims 8 to 10 as dependent on claim 7, directly or indirectly, wherein the plurality of arms (58) are pivotable relative to the ring (52).

12. The apparatus of any preceding claim, wherein the tensioning assembly comprises a threaded assembly (80) between the ring (52) and the outer bracket (56).

13. A fan assembly (10), comprising:
a fan (12) on an end (14) of a fan shaft (16);
a nose cone (54; 54'; 54'') centrally mounted on the fan (12);
a fan housing (18) having an edge surrounding an opening for the fan (12), the fan shaft (16) being mounted within the fan housing (18) in a plurality of bearings (20); and
the apparatus (50) of any preceding claim.

14. A method for stabilizing a fan assembly (10) of a gas turbine engine during transport, wherein the fan assembly (10) comprises:
a fan (12) on an end (14) of a fan shaft (16);
a nose cone (54; 54'; 54'') centrally mounted on the fan (12); and
a fan housing (18) having an edge surrounding an opening for the fan (12), the fan shaft (16) being mounted within the fan housing (18) in a plurality of bearings (20); the method comprising
engaging the nose cone (54; 54'; 54'') with a ring (52) configured to engage the nose cone (54; 54'; 54'');
affixing an outer bracket (56) to the fan housing (18), the outer bracket (56) being connected to the ring (52); and
tensioning a tensioning assembly between the ring (52) and the outer bracket (56) to move the ring (52) along an axis of the shaft (16), the ring (52) engaging the nose cone (54; 54'; 54'') and radially supporting the nose cone (54; 54'; 54'') within the fan housing (18), and the ring (52) pushing the fan (12) and the fan shaft (16) rearward relative to the fan housing (18) whereby compression is applied to the plurality of bearings (20).

15. The method of claim 14, wherein the outer bracket (56) comprises a plurality of arms (58) extending between the ring (52) and the fan housing (18), and wherein the plurality of arms (58) are adjustable in length such that the outer bracket (56) is adjustable to different diameter fan housings (18), the method further comprising the step of adjusting the length of the plurality of arms (58) such that the outer bracket (56) can be connected to the ring (52) and also to fan housings (18) of different diameter.
